# EUROPÄISCHE PATENTSCHRIFT

(11) **EP 1 165 937 B1**
(45) Veröffentlichungstag und Bekanntmachung des Hinweises auf die Patenterteilung: **14.12.2005**
(21) Anmeldenummer: 00974286.7
(22) Anmeldetag: 05.09.2000
(51) Int. Cl.: E21D 11/00

(54) **DICHTANORDNUNG FÜR DEN TUNNELBAU**
SEALING ARRANGEMENT
ENSEMBLE ETANCHE

(30) Priorität: 14.09.1999 DE 19944068
(43) Veröffentlichungstag der Anmeldung: 02.01.2002
(73) Patentinhaber: Phoenix AG, 21079 Hamburg (DE)
(72) Erfinder: KASSEL, Dieter, 30952 Rönnenberg (DE); DEGEL, Werner, 21244 Buchholz (DE); GUTSCHMIDT, Holger, 21629 Neu Wulmstorf (DE)
(86) Internationale Anmeldenummer: PCT/DE2000/003033
(87) Internationale Veröffentlichungsnummer: WO 2001/020130

(56) Entgegenhaltungen:
- EP-A1- 0 306 581
- EP-A1- 0 553 723
- EP-A1- 0 631 034
- EP-A1- 0 633 413
- EP-A1- 0 900 834
- WO-A1-96/27073

## Beschreibung

Die Erfindung betrifft eine Dichtanordnung, umfassend wenigstens:
- zwei aneinanderstoßende Bauteile aus Beton, Stahl, Stahlbeton, Gußeisen oder anderen Materialien (z.B. Kunstarz) unter Bildung eines Spaltes sowie
- eine Dichtung, die den Spalt abdichtend überbrückt, wobei die Dichtung einen Grundkörper, der ein Extrudat aus elastomerem Werkstoff ist, aufweist, wobei das Extrudat ein Dichtprofil ist, das mit strangförmig verlaufenden Rillennuten und/oder kanälen versehen ist.

Eine gattungsgemäße Dichtanordnung ist aus der US-A-4 946 309 bekannt, wobei die aneinanderstoßenden Bauteile Segmente sind, die zu einem rohrförmigen Tunnel zusammengesetzt sind, und zwar unter Bildung von Quer- und Längsfugen. Jedes Segment ist dabei vorzugsweise mit wenigstens einer alle Segmentstoßseiten erfassenden umlaufenden Aussparung versehen, wobei sich wiederum in jeder Aussparung ein strangförmig verlaufendes Dichtprofil aus elastomerem Werkstoff befindet. Infolge des Zusammenpressens der aneinanderstoßenden Segmente unter Verringerung des Spaltes entfaltet dann das Dichtprofil unter der Wechselwirkung von Kraft und Reaktionskraft seine Dichtleistung.

Aus der EP-B-0 807 204 und WO-A-96/27073 ist ferner bekannt, derartige Dichtprofile für den Tunnelbau mit einer zusätzlichen Notdichtung aus einem mit Wasser aktivierbaren Dichtmaterial zu versehen. Dabei soll die Notdichtung erst dann aktiviert werden, wenn eine kritische Situation eintritt, beispielsweise bei starkem Segmentversatz.

Bei Tunnelsegmenten, insbesondere bei Schlußsteinen, werden Dichtprofile aus elastomerem Werkstoff häufig mit einer Gleitschicht ausgestattet, die sich innerhalb der Kontaktfläche der aneinanderstoßenden Dichtprofile befindet. Nach der EP-B-0 574 559 besteht die Gleitschicht aus einem Material, das härter ist als der eigentliche Dichtprofilkörper. Der Nachteil bei diesem Dichtkonzept ist, daß die Elastizität des Dichtprofiles ungünstig beeinflußt wird.

Ein weiteres Beispiel für eine gattungsgemäße Dichtanordnung ist in Verbindung mit der Abdichtung von Rohren oder Schachtbauwerken zu nennen. Die beiden aneinanderstoßenden Bauteile sind hierbei ein Muffenende einerseits, das einen Muffengrund und einen Muffenspiegel umfaßt, sowie ein Spitzende andererseits, wobei ein ringförmiges Dichtprofil aus elastomerem Werkstoff den Muffenspalt abdichtend überbrückt. Ein derartiges Dichtkonzept ist beispielsweise in der EP-B-0 449 082 beschrieben.

Um das Zusammenfügen von Muffenende und Spitzende zu erleichtern, wird in der EP-B-0 011 919 vorgeschlagen, das Dichtprofil innerhalb der Kontaktseite zum Spitzende mit einem Gleit- bzw. Schmiermittel zu versehen, insbesondere in Verbindung mit einem Gleitschlauch. Bei einer derartigen Konzeption mußte jedoch häufig eine Verringerung der Dichtleistung in Kauf genommen werden.

Ausgehend von dem oben beschriebenen Stand der Technik besteht die Aufgabe der Erfindung darin, eine Dichtanordnung bereitzustellen, bei der sich unabhängig vom Einsatzzweck die Dichtung durch eine hohe Dichtleistung auszeichnet sowie das Zusammenfügen der Bauteile erleichtert wird.

Gelöst wird diese Aufgabe durch eine Dichtanordnung, bei der
- die Dichtung als Verbundsystem eine Matrix aufweist, die mit dem Grundkörper kombiniert und ein pastöses Gemisch ist, umfassend ein wasserlösliches Material, in das ein Gleitmittel und ein mit Wasser aktivierbares Quellmittel sowie gegebenenfalls weitere Zusatzstoffe eingemischt sind, wobei das Gemisch der Matrix folgende Mengenanteile umfasst:

| | |
|---|---|
| wasserlösliches Material | 50 bis 150 Gew.-Teile |
| Gleitmittel | 20 bis 100 Gew.-Teile |
| Quellmittel | 20 bis 100 Gew.-Teile |
| sonstige Zusatzstoffe | 0 bis 150 Gew.-Teile |

- wobei das wasserlösliche Material ein Polyethylenglykol und das Gleitmittel ein Graphit-Pulver und/oder ein Silikonöl ist.

Das Gemisch der Matrix umfaßt dabei vorzugsweise folgende Mengenanteile (Gewichts-Teile):

| | |
|---|---|
| wasserlösliches Material | 80 bis 120 |
| Gleitmittel | 40 bis 70 |
| Quellmittel | 30 bis 60 |

Als wasserlösliches Material wird vorzugsweise ein Polyethylenglykol mit einem Molekulargewicht von 200 bis 1000 verwendet, wobei je nach Molekulargewicht des Polyethylenglykols die Viskosität eingestellt werden kann.

Als Quellmittel kann jedes gegen Wasser aufquellbare Material eingesetzt werden (z.B. Hydrotite). Durch das Einrühren des Quellmittels in Polyethylenglykol wird nun Sorge dafür getragen, daß ein unerwünschtes Vorabaufquellen unterbteibt.

Die sonstigen Zusatzstoffe können beispielsweise Farbstoffe, helle Füllstoffe sowie Verdickungsmittel sein.

Weitere vorteilhafte Gestaltungsvarianten werden in Verbindung mit der Figurenbeschreibung vorgestellt.

Die Erfindung wird nun anhand von Ausführungsbeispielen, wobei ausschließlich Bezug auf die Dichtung genommen wird, unter Bezugnahme auf schematische Zeichnungen erläutert. Es zeigen:
- Fig. 1: eine Dichtung für den Tunnelbau, bei der die Matrix mit einem Ausreißsteg abgedeckt ist;
- Fig. 2: eine Dichtung für den Tunnelbau, bei der die Matrix mit einer Folie abgedeckt ist;
- Fig. 3: eine Dichtung für den Kanalbau, bei der die Matrix mit einem Ausreißsteg abgedeckt ist;
- Fig. 4: eine Dichtung für den Kanalbau, bei der die Matrix mit einer Folie abgedeckt ist.

In Verbindung mit diesen Figuren gilt folgende Bezugsziffernliste:
- **1, 1'**: Dichtung für den Tunnelbau
- **2, 2'**: Grundkörper der Dichtung für den Tunnelbau
- **3**: Rillennut
- **4**: Kanal
- **5**: Kammer
- **6**: Ausreißsteg
- **7,7'**: Matrix
- **8**: Nut
- **9**: Folie
- **10, 10'**: Dichtung für den Kanalbau
- **11, 11'**: Grundkörper der Dichtung für den Kanalbau
- **12**: Verankerungsfuß
- **13**: Kanal
- **14**: Kammer
- **15**: Ausreißsteg
- **16, 16'**: Matrix
- **17**: Nut
- **18**: Folie

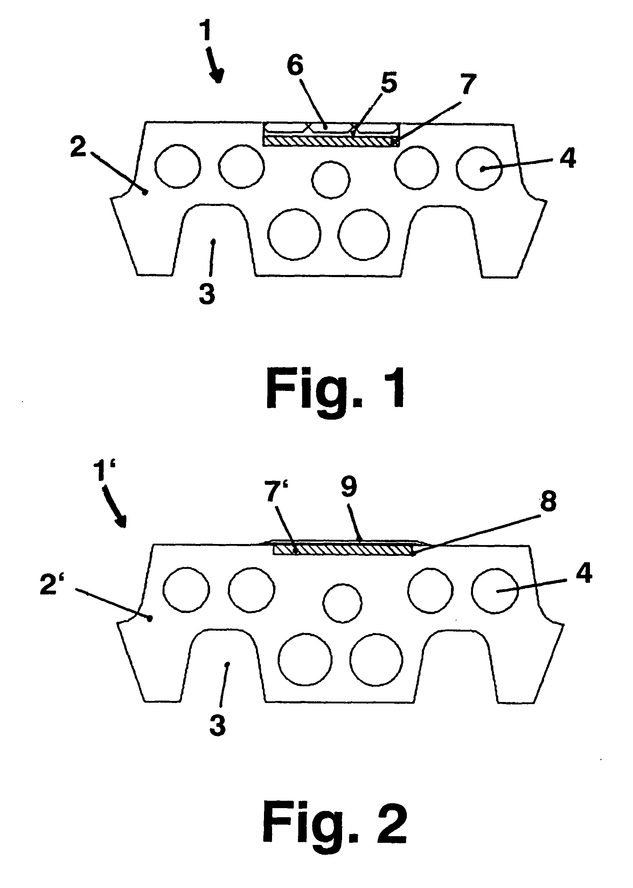

Fig. 1 zeigt eine Dichtung **1** für den Tunnelbau. Die Dichtung ist dabei ein Verbundsystem, umfassend einen Grundkörper **2** und eine schichtförmige Matrix **7**, deren Schichtstärke kleiner ist als die des Grundkörpers. Der Grundkörper **2** aus elastomerem Werkstoff ist mit zwei Rillennuten **3**, insgesamt sieben Kanälen **4** sowie einer Kammer **5** ausgestattet, die sich innerhalb des Gleitbereiches des Grundkörpers befindet. Die dünne Kammerwand ist in Form eines Ausreißsteges **6** gebildet. Der Grundkörper einschließlich des Ausreißsteges ist ein Extrudat mit einem einheitlichen elastomeren Werkstoff. Innerhalb der Kammer **5** befindet sich die Matrix **7**, die zunächst durch den Ausreißsteg **6** vor äußeren Einflüssen geschützt wird (z.B. beim Transport). Vor dem Einbau, d.h. vor dem Zusammenfügen der Segmente (z.B. aus Beton), wird dann der Ausreißsteg entfernt, wobei dann die Matrix ihre Aufgabe erfüllen kann.

Fig. 2 zeigt eine etwas modifizierte Dichtung **1'** für den Tunnelbau. Der Grundkörper **2'** ist hier innerhalb seines Gleitbereiches mit einer Nut **8** versehen, in der die Matrix **7'** einsitzt. Der Schutzstreifen, der die Matrix zunächst abdeckt, ist eine Folie **9**. Vor dem Einbau wird dann diese Folie ebenfalls entfernt.

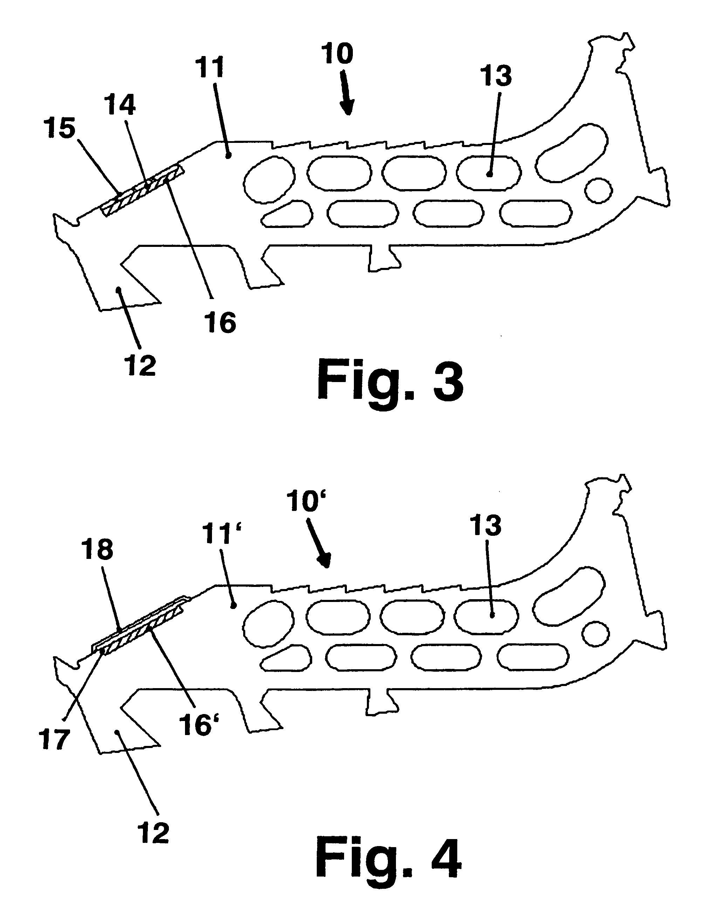

Fig. 3 zeigt eine Dichtung **10** für den Kanalbau (Rohre, Schächte). Die Dichtung ist auch hier ein Verbundsystem, umfassend einen Grundkörper **11** und eine schichtförmige Matrix **16.** Der Grundkörper **11** aus elastomerem Werkstoff ist mit mehreren Verankerungsfüßen **12** ausgestattet, die innerhalb des Muffenendes (z.B. aus Beton) verankert sind. Außerdem ist der Grundkörper mit mehreren Kanälen **13** versehen, die zweireihig angeordnet sind. Innerhalb seines Gleitbereiches weist der Grundkörper eine Kammer **14** auf, wobei die dünnwandige Kammerwand in Form eines Ausreißsteges **15** gebildet ist. Innerhalb der Kammer **14** befindet sich die Matrix **16**. Auch hier wird vor dem Einbau, d.h. vor dem Zusammenfügen von Muffenende und Spitzende, der Ausreißsteg entfernt.

Fig. 4 zeigt eine etwas modifizierte Dichtung **10'** für den Kanalbau. Der Grundkörper **11'** ist hier innerhalb seines Gleitbereiches mit einer Nut **17** versehen, in der die Matrix 1**6'** einsitzt. Der Schutzstreifen, der die Matrix zunächst abdeckt, ist eine Folie **18**. Vor dem Einbau wird dann diese Folie ebenfalls entfernt.

Der Grundkörper **2, 2'** (Fig. 1, 2) bzw. **11, 11'** (Fig. 3, 4) wird durch Extrusion hergestellt, wobei dann nachträglich die Matrix **7, 7'** bzw. **16, 16'** in die entsprechende Kammer **5, 14** bzw. Nut **8, 17** eingebracht wird, verbunden mit einer Schutzwirkung durch den Ausreißsteg **6, 15** bzw. durch die Folie **9, 18.**

Bei entsprechender Verfahrenstechnik in Abwesenheit von Feuchtigkeit ist auch eine Koextrusion von Grundkörper und Matrix möglich.

## Patentansprüche

1. Dichtanordnung, umfassend wenigstens:
- zwei aneinanderstoßende Bauteile unter Bildung eines Spaltes sowie
- eine Dichtung (1, 1', 10, 10'), die den Spalt abdichtend überbrückt, wobei die Dichtung einen Grundkörper (2, 2', 11, 11'), der ein Extrudat aus elastomerem Werkstoff ist, aufweist, wobei das Extrudat ein Dichtprofil ist, das mit strangförmig verlaufenden Rillennuten (3) und/oder Kanälen (4, 13) versehen ist;
**dadurch gekennzeichnet, daß**
- die Dichtung (1, 1', 10, 10') als Verbundsystem eine Matrix (7, 7', 16, 16') aufweist, die mit dem Grundkörper (2, 2', 11, 11') kombiniert und ein pastöses Gemisch ist, umfassend ein wasserlösliches Material, in das ein Gleitmittel und ein mit Wasser aktivierbares Quellmittel sowie gegebenenfalls weitere Zusatzstoffe eingemischt sind, wobei das Gemisch der Matrix folgende Mengenanteile umfasst:
| | |
|---|---|
| wasserlösliches Material | 50 bis 150 Gew.-Teile |
| Gleitmittel | 20 bis 100 Gew.-Teile |
| Quellmittel | 20 bis 100 Gew.-Teile |
| sonstige Zusatzstoffe | 0 bis 150 Gew.-Teile |
- wobei das wasserlösliche Material ein Polyethylenglykol und das Gleitmittel ein Graphit-Pulver und/oder ein Silikonöl ist.

2. Dichtanordnung nach Anspruch 1, **dadurch gekennzeichnet, daß** das Gemisch der Matrix (7, 7', 16, 16') folgende Mengenanteile umfaßt:
| | |
|---|---|
| wasserlösliches Material | 80 bis 120 Gew.-Teile |
| Gleitmittel | 40 bis 70 Gew.-Teile |
| Quellmittel | 30 bis 60 Gew.-Teile |

3. Dichtanordnung nach Anspruch 1 oder 2, **dadurch gekennzeichnet, daß**,das Polyethylenglykol ein Molekulargewicht von 200 bis 1000 aufweist.

4. Dichtanordnung nach einen der Ansprüche 1 bis 3, **dadurch gekennzeichnet, daß** die Matrix (7, 7', 16, 16') im Gleitbereich des Grundkörpers (2, 2', 11, 11') in Form einer Schicht angeordnet ist.

5. Dichtanordnung nach Anspruch 4, **dadurch gekennzeichnet, daß** die Schichtstärke der Matrix (7, 7', 16, 16') kleiner ist als die des Grundkörpers (2, 2'. 11, 11').

6. Dichtanordnung nach einem der Ansprüche 1 bis 5, **dadurch gekennzeichnet, daß** die Matrix (7; 7', 16, 16') mit einem Schutzstreifen abgedeckt ist, der vor dem Einbau entfernt oder beim Einbau zerstört wird.

7. Dichtanordnung nach Anspruch 6, **dadurch gekennzeichnet, daß** der Schutzstreifen eine Folie (9, 18) ist.

8. Dichtanordnung nach einem der Ansprüche 1 bis 7, insbesondere in Verbindung mit Anspruch 6 oder 7, **dadurch gekennzeichnet, daß** im Gleitbereich des Grundkörpers (2', 11') wenigstens eine Nut (8, 17) vorhanden ist, in der die Matrix (7', 16') einsitzt.

9. Dichtanordnung nach einem der Ansprüche 1 bis 5, **dadurch gekennzeichnet, daß** im Gleitbereich des Grundkörpers (2, 11) wenigstens eine Kammer (5, 14) vorhanden ist, in der die Matrix (7, 16) einsitzt, wobei die die Matrix einschließende Kammerwand so dünn ist, daß diese vor dem Einbau entfernt oder beim Einbau zerstört werden kann.

10. Dichtanordnung nach Anspruch 9, **dadurch gekennzeichnet, daß** die Kammerwand in Form eines Ausreißsteges (6, 15) gebildet ist.

## Claims

1. Sealing arrangement comprising at least:
- two abutting components forming a gap and
- a seal (1, 1', 10, 10') which sealingly bridges the gap, the seal exhibiting a base body (2, 2', 11, 11') which is an extrusion of elastomer material, the extrusion being a sealing profile which is provided with grooves (3) and/or channels (4, 13) running continuously in a line,
**characterised in that**
- the seal (1, 1', 10, 10') as a composite system exhibits a matrix (7, 7', 16, 16') which combines with the base body (2, 2', 11, 11') and is a pasty mixture, comprising a water-soluble material in which are mixed a lubricant and a swelling agent which can be activated with water, and possibly further additives, the mixture of the matrix comprising the following proportions: water-soluble material 50 to 150 parts by weight lubricant 20 to 100 parts by weight
swelling agent 20 to 100 parts by weight
other additives 0 to 150 parts by weight
- the water-soluble material being a polyethylene glycol and the lubricant a graphite powder and/or a silicone oil.

2. Sealing arrangement according to claim 1, **characterised in that** the mixture of the matrix (7, 7', 16, 16') comprises the following proportions:
water-soluble material 80 to 120 parts by weight lubricant 40 to 70 parts by weight
swelling agent 30 to 60 parts by weight.

3. Sealing arrangement according to claim 1 or 2,
**characterised in that** the polyethylene glycol has a molecular weight of 200 to 1000.

4. Sealing arrangement according to one of claims 1 to 3, **characterised in that** the matrix (7, 7', 16, 16') is arranged in the form of a layer in the sliding area of the base body (2, 2', 11, 11').

5. Sealing arrangement according to claim 4,
**characterised in that** the thickness of the layer of the matrix (7, 7', 16, 16') is less than that of the base body (2, 2', 11, 11').

6. Sealing arrangement according to one of claims 1 to 5, **characterised in that** the matrix (7, 7', 16, 16') is covered with a protective strip which is removed prior to installation or destroyed during installation.

7. Sealing arrangement according to claim 6, **characterised in that** the protective strip is a film (9, 18).

8. Sealing arrangement according to one of claims 1 to 7, in particular in conjunction with claim 6 or 7,
**characterised in that** in the sliding area of the base body (2', 11') there is at least one groove (8, 17) in which the matrix (7', 16') sits.

9. Sealing arrangement according to one of claims 1 to 5, **characterised in that** in the sliding area of the base body (2, 11) there is at least one chamber (5, 14) in which the matrix (7, 16) sits, the chamber wall enclosing the matrix being so thin that this can be removed prior to installation or destroyed during installation.

10. Sealing arrangement according to claim 9,
**characterised in that** the chamber wall takes the form of a tear-out strip (6, 15).

## Revendications

1. Ensemble étanche comprenant au moins :
- deux composants étant voisins l'un de l'autre en formant un intervalle, ainsi que
- un joint d'étanchéité (1,1',10,10') pontant de façon étanche l'intervalle, le joint d'étanchéité présentant un corps de base (2,2',11,11') formé d'un extrudat en matériau élastomère, l'extrudat étant un profilé d'étanchéité muni de rainures de cannelures (3) et/ou de canaux (4,13), s'étendant en forme de tronçons ;
**caractérisé en ce que**
- le joint d'étanchéité (1,1',10',10') présente, en tant que système de liaison, une matrice (7,7',16,16'), qui est combinée au corps de base (2,2',11,11'), et est un mélange pâteux comprenant un matériau soluble dans l'eau, dans lequel un agent glissant et un agent gonflant, activable à l'eau, ainsi que, le cas échéant, d'autre aditifs, sont introduits en mélange, le mélange de la matrice présentant les proportions quantitatives suivantes :
| | |
|---|---|
| Matériau soluble dans l'eau | 50 à 150 parties en poids |
| Agent glissant | 20 à 100 parties en poids |
| Agent gonflant | 20 à 100 parties en poids |
| Autres aditifs | 0 à 150 parties en poids. |
- le matériau soluble dans l'eau étant un polyéthylène glycol et l'agent glissant de la poudre de graphite et/ou une huile de silicone.

2. Ensemble étanche selon la revendication 1, **caractérisé en ce que** le mélange de la matrice (7,7',16,16') présente les proportions quantitatives suivantes :
| | |
|---|---|
| Matériau soluble dans l'eau | 80 à 120 parties en poids |
| Agent glissant | 40 à 70 parties en poids |
| Agent gonflant | 30 à 60 parties en poids. |

3. Ensemble étanche selon la revendication 1 ou 2, **caractérisé en ce que** le polyéthylène glycol présente un poids moléculaire de 200 à 1000.

4. Ensemble étanche selon l'une des revendications 1 à 3, **caractérisé en ce que** la matrice (7,7',16,16') est disposée dans la zone de glissement du corps de base (2,2',11,11'), sous la forme d'une couche.

5. Ensemble étanche selon la revendication 4, **caractérisé en ce que** l'épaisseur de couche de la matrice (7,7',16,16') est inférieure à celle du corps de base (2,2',11,11').

6. Ensemble étanche selon l'une des revendications 1 à 5, **caractérisé en ce que** la matrice (7,7',16,16') est couverte d'une bande de protection, enlevée avant montage ou détruite lors du montage.

7. Ensemble étanche selon la revendication 6, **caractérisé en ce que** la bande de protection est une feuille (9,18).

8. Ensemble étanche selon l'une des revendications 1 à 7, en particulier en liaison avec la revendication 6 ou 7 **caractérisé en ce que**, dans la zone de glissement du corps de base (2',11'), est prévue une rainure (8,17) dans laquelle s'insère la matrice (7',16').

9. Ensemble étanche selon l'une des revendications 1 à 5, **caractérisé en ce que**, dans la zone de glissement du corps de base (2,11), est prévue au moins une chambre (5,14) dans laquelle s'insère la matrice (7,16), la paroi de chambre enfermant la matrice étant fine, de sorte que celle-ci peut être enlevée avant le montage ou détruite lors du montage.

10. Ensemble étanche selon la revendication 9, **caractérisé en ce que** la paroi de chambre est formée sous forme d'une nervure de déchirement (6,15).
